# EUROPÄISCHE PATENTANMELDUNG

(11) **EP 4 626 038 A1**
(43) Veröffentlichungstag der Anmeldung: **01.10.2025**
(21) Anmeldenummer: 25162673.5
(22) Anmeldetag: 10.03.2025
(51) Int. Cl.: H04R 25/00, G10L 13/033, G10L 13/00, G10L 15/26

(54) **UNTERSTÜTZUNG DES HÖRVERSTÄNDNISSES EINES HÖRINSTRUMENTEN-NUTZERS**

(30) Priorität: 26.03.2024 DE 102024202870
(71) Anmelder: Sivantos Pte. Ltd., Singapore 539775 (SG)
(72) Erfinder: Rettelbach, Florian Josef, 91058 Erlangen (DE)
(74) Vertreter: FDST Patentanwälte

(57) **Zusammenfassung**

Es werden ein Verfahren zur Unterstützung des Hörverständnisses eines Hörinstrumenten-Nutzers und ein zugehhöriges Hörsystem (2) mit einem solchen Hörinstrument (2) angegeben. Mittels des Hörinstruments (4) wird ein Sprache enthaltender Umgebungsschall aus der Umgebung des Nutzers aufgenommen. Die in dem aufgenommenen Umgebungsschall enthaltene Sprache wird automatisch in Textdaten (T) umgewandelt. Diese Textdaten (T) werden als graphische Darstellung (G) von Text auf einem Bildschirm (40) des Hörinstruments (4) oder eines damit datenübertragungstechnisch verbundenen Peripheriegeräts (22) und/oder als synthetisierte Sprache (L) in Form eines Schallsignals an den Nutzer ausgegeben. Für die in dem Umgebungsschall enthaltene Sprache wird automatisch und zeitaufgelöst eine Herkunftsrichtung (R) und/oder mindestens eine Sprechereigenschaft (S) bestimmt. Die graphische Darstellung (G) der Textdaten (T) bzw. die synthetisierte Sprache (L) werden dabei in Abhängigkeit von der ermittelten Herkunftsrichtung (R) und/oder der mindestens einen Sprechereigenschaft (S) zeitaufgelöst variiert. Zusätzlich oder alternativ zu der unmittelbaren Ausgabe an den Nutzer werden die graphische Darstellung (G) der Textdaten (T) bzw. die synthetisierte Sprache (L) für eine spätere Ausgabe aufgezeichnet.

## Beschreibung

Die Erfindung bezieht sich auf ein Verfahren zur Unterstützung des Hörverständnisses eines Nutzers eines Hörinstruments. Die Erfindung bezieht sich weiterhin auf ein Hörsystem mit einem solchen Hörinstrument.

Als Hörinstrument wird allgemein ein elektronisches Gerät bezeichnet, dass das Hörvermögen einer das Hörinstrument tragenden Person (die nachfolgend als "Träger" oder "Nutzer" bezeichnet ist) unterstützt. Insbesondere bezieht sich die Erfindung auf Hörinstrumente, die dazu eingerichtet sind, einen Hörverlust eines hörgeschädigten Nutzers ganz oder teilweise zu kompensieren. Ein solches Hörinstrument wird auch als "Hörgerät" bezeichnet. Daneben gibt es Hörinstrumente, die das Hörvermögen von normalhörenden Nutzern, z.B. in lauten, anstrengenden oder komplexen Hörsituationen, schützen oder verbessern sollen.

Hörinstrumente im Allgemeinen, und Hörgeräte im Speziellen, sind meist dazu ausgebildet, am Kopf und hier insbesondere ihn oder an einem Ohr des Nutzers getragen zu werden, insbesondere als Hinter-dem-Ohr-Geräte (nach dem englischen Begriff "behind the ear" auch als BTE-Geräte bezeichnet) oder In-dem-Ohr-Geräte (nach dem englischen Begriff "in the ear" auch als ITE-Geräte bezeichnet). Im Hinblick auf ihre interne Struktur weisen Hörinstrumente regelmäßig mindestens einen (akusto-elektrischen) Eingangswandler, eine Signalverarbeitungseinheit (Signalprozessor) und einen Ausgangswandler auf. Im Betrieb des Hörinstruments nimmt der oder jeder Eingangswandler einen Luftschall aus der Umgebung des Hörinstruments auf und wandelt diesen Luftschall in ein Eingangs-Audiosignal (d. h. ein elektrisches Signal, dass eine Information über den Umgebungsschall transportiert) um. Dieses mindestens eine Eingangs-Audiosignal ist nachfolgend auch als "aufgenommenes Schallsignal" bezeichnet. In der Signalverarbeitungseinheit wird das oder jedes Eingangs-Audiosignal verarbeitet (d. h. hinsichtlich seiner Schallinformation modifiziert), um das Hörvermögen des Nutzers zu unterstützen, insbesondere um einen Hörverlust des Nutzers auszugleichen. Die Signalverarbeitungseinheit gibt ein entsprechend verarbeitetes Audiosignal (auch als "Ausgangs-Audiosignal" oder "modifiziertes Schallsignal" bezeichnet) an den Ausgangswandler aus. In anderen Ausführungen kann das Hörinstrument auch als handgehaltenes Gerät oder als Tischgerät ausgebildet sein. Der Ausgangswandler kann dabei beispielsweise durch einen (drahtgebunden oder drahtlos mit dem handgehaltenen Gerät oder Tischgerät verbundenen) Kopfhörer gebildet sein.

In den meisten Fällen ist der Ausgangswandler als elektro-akustischer Wandler ausgebildet, der das (elektrische) Ausgangs-Audiosignal wieder in einen Luftschall umwandelt, wobei dieser - gegenüber dem Umgebungsschall modifizierte - Luftschall in den Gehörgang des Nutzers abgegeben wird. Bei einem hinter dem Ohr getragenen Hörinstrument ist der auch als "Hörer" ("Receiver") bezeichnete Ausgangswandler meist außerhalb des Ohrs in einem Gehäuse des Hörinstruments integriert. Der von dem Ausgangswandler ausgegebene Schall wird in diesem Fall mittels eines Schallschlauchs in den Gehörgang des Nutzers geleitet. Alternativ hierzu kann der Ausgangswandler auch in dem Gehörgang, und somit außerhalb des hinter dem Ohr getragenen Gehäuses, angeordnet sein. Solche Hörinstrumente werden (nach dem englischen Begriff "receiver in canal") auch als RIC-Geräte bezeichnet. Im Ohr getragene Hörinstrumente, die so klein dimensioniert sind, dass sie nach außen über den Gehörgang nicht hinausstehen, werden (nach dem englischen Begriff "completely in canal") auch als CIC-Geräte bezeichnet.

In weiteren Bauformen kann der Ausgangswandler auch als elektro-mechanischer Wandler ausgebildet sein, der das Ausgangs-Audiosignal in Körperschall (Vibrationen) umwandelt, wobei dieser Körperschall zum Beispiel in den Schädelknochen des Nutzers abgegeben wird. Ferner gibt es implantierbare Hörinstrumente, insbesondere Cochlear-Implantate, und Hörinstrumente, deren Ausgangswandler den Hörnerv des Nutzers direkt stimulieren.

Der Begriff "Hörsystem" bezeichnet ein einzelnes Gerät oder eine Gruppe von Geräten und ggf. nicht-körperlichen Funktionseinheiten, die zusammen die im Betrieb eines Hörinstruments erforderlichen Funktionen bereitstellen. Das Hörsystem kann im einfachsten Fall aus einem einzelnen Hörinstrument bestehen. Alternativ hierzu kann das Hörsystem zwei zusammenwirkende Hörinstrumente zur Versorgung der beiden Ohren des Nutzers umfassen. In diesem Fall wird von einem "binauralen Hörsystem" gesprochen. Zusätzlich oder alternativ kann das Hörsystem mindestens ein weiteres elektronisches Gerät, zum Beispiel eine Fernbedienung, ein Ladegerät oder ein Programmiergerät für das oder jedes Hörinstrument umfassen. Bei modernen Hörsystemen ist oft anstelle einer Fernbedienung oder eines dedizierten Programmiergerätes ein Steuerprogramm, insbesondere in Form einer sogenannten App, vorgesehen, wobei dieses Steuerprogramm zur Implementierung auf einem externen Computer, insbesondere einem Smartphone oder Tablet, ausgebildet ist. Der externe Computer ist dabei regelmäßig selbst kein Teil des Hörsystems, insofern als er in der Regel unabhängig von dem Hörsystem und auch nicht von dem Hersteller des Hörsystems bereitgestellt wird. Der externe Computer, insbesondere das Smartphone des Nutzers, wird vielmehr von dem Hörsystem nur als externe Ressource für Rechenleistung, Speicherplatz sowie optional Kommunikationsdienste verwendet.

Nutzer von Hörinstrumenten haben häufig Probleme, (gesprochene) Sprache in ihrer Umgebung (z.B. Sprache von Kommunikationspartnern oder Sprachschall aus Tonwiedergabegeräte wie z.B. Radio oder Fernseher) zu verstehen. Bei Hörgerätenutzern liegt dies regelmäßig an einer Hörschädigung des Nutzers, die auch durch moderne Hörgerätetechnik oft nur teilweise kompensiert werden kann. Auch bei normal hörenden Nutzern ist die Unterstützung oder gar Verbesserung des Sprachverständnisses durch ein Hörinstrument ein komplexes Problem. In beiden Fällen wird das Hörverständnis häufig durch störende Hintergrundgeräusche (insbesondere Gesprächsgeräusche), undeutliche Aussprache oder eine für den Nutzer ungewohnte Aussprache (z.B. die Verwendung eines Akzents oder Dialekts) erschwert.

Der Erfindung liegt die Aufgabe zugrunde, das Hörverständnis eines Hörinstrumenten-Nutzers (also die Fähigkeit des Nutzers, gehörte Sprache zu verstehen) effektiv zu unterstützen.

Bezüglich eines Verfahrens zur Unterstützung des Hörverständnisses eines Nutzers eines Hörinstruments wird diese Aufgabe gemäß der Erfindung unabhängig gelöst durch die Merkmale der Ansprüche 1 und 3. Bezüglich eines Hörsystems wird die Aufgabe gemäß der Erfindung unabhängig gelöst durch die Merkmale der Ansprüche 9 und 10. Vorteilhafte und teils für sich gesehen erfinderische Ausgestaltungen oder Weiterentwicklungen der Erfindung sind in den Unteransprüchen und der nachfolgenden Beschreibung dargelegt.

Verfahrensgemäß wird mittels des Hörinstruments ein Sprache enthaltender Umgebungsschall aus der Umgebung des Nutzers aufgenommen. Sprache, die in dem aufgenommenen Umgebungsschall enthalten ist, wird automatisch erfasst und in Textdaten umgewandelt. Die Textdatei wird vorzugsweise in Form von alphanumerischen Zeichen in einer datentechnischen Codierung erzeugt. Alternativ hierzu kann die Textdatei aber die erfasste Sprache aber auch in einer alternativen Form, z.B. in Form von (von alphanumerischen Zeichen abweichenden) Phonems, Silben, Worten und/oder Satzteilen in datentechnischer Codierung erzeugt werden.

In einer ersten Variante des erfindungsgemäßen Verfahrens werden diese Textdaten als graphische Darstellung von Text auf einem Bildschirm ausgegeben. Der Bildschirm kann dabei grundsätzlich im Rahmen der Erfindung ein intrinsischer Teil des Hörinstruments sein, z.B. wenn das Hörinstrument als handgehaltenes Gerät oder Tischgerät ausgebildet ist. Bevorzugt (insbesondere bei am oder im Ohr getragenen Hörinstrumenten) erfolgt die Ausgabe der Textdaten aber über einen Bildschirm eines mit dem Hörinstrument datenübertragungstechnisch verbundenen Peripheriegeräts (z.B. des mit dem Hörinstrument verbundenen Smartphones oder einer Smartwatch des Nutzers).

In einer zweiten Variante des erfindungsgemäßen Verfahrens werden die Textdaten in synthetisierte Sprache umgewandelt und in Form eines Schallsignals an den Nutzer ausgegeben. Die Ausgabe erfolgt dabei vorzugsweise über den mindestens einen Ausgangswandler des Hörinstruments. Der in dem Umgebungsschall enthaltene originäre Sprachschall wird bei und während der Ausgabe der synthetisierten Sprache vorzugsweise durch mechanische und/oder signalverarbeitungstechnische Mittel gedämpft oder vollständig ausgeblendet. Optional werden statt dem natürlichen Umgebungsschall künstlich erzeugte Umgebungsgeräusche (Rauschen, Vogelgezwitscher, Musik) der synthetisierten Sprache zugemischt, um künstlich eine natürlich anmutende Geräuschsituation zu erzeugen und somit eine mögliche Irritation des Nutzers zu vermeiden.

Um das Hörverständnis besonders effektiv zu unterstützen, werden in beiden Varianten der Erfindung für die in dem Umgebungsschall enthaltene Sprache automatisch und zeitaufgelöst eine Herkunftsrichtung und/oder mindestens eine (den Sprecher näher charakterisierende) Sprechereigenschaft bestimmt. Die graphische Darstellung der aus dem Umgebungsschall abgeleiteten Textdaten bzw. die synthetisierte Sprache werden dabei erfindungsgemäß in Abhängigkeit von der ermittelten Herkunftsrichtung und/oder der mindestens einen Sprechereigenschaft zeitaufgelöst variiert.

Als Herkunftsrichtung wird dabei die Einfallrichtung des in dem Umgebungsschall enthaltenden Sprachschalls relativ zu dem Kopf des Nutzers (insbesondere relativ zu der Blickrichtung des Nutzers) bezeichnet. Es wird also - vorzugsweise unter Verwendung von adaptiver direktionaler Tonaufnahme (adaptivem Beamforming) - analysiert, woher die in dem Umgebungsschall enthaltene Sprache einfällt. Als Sprechereigenschaften (oder auch Stimmeigenschaften) werden allgemein Eigenschaften der in dem Umgebungsschall enthaltenen Stimme bezeichnet, anhand welcher mindestens eine persönliche Eigenschaft des jeweiligen Sprechers charakterisierbar ist und anhand welcher der Sprecher somit von anderen Sprechern unterscheidbar ist. Die mindestens eine Sprechereigenschaft ist beispielsweise ausgewählt aus der Stimmfarbe, der tonalen Stimmlage (d.h. die Tonhöhe des Grundtons der Stimme) oder der Sprechgeschwindigkeit oder - aus der Analyse der Stimme abgeleitet - eine Annahme über das Geschlecht und/oder oder das Alter des Nutzers.

Die Textdaten bzw. die synthetisierte Sprache werden vorzugsweise in Echtzeit an den Nutzer ausgegeben, d.h. ohne deutlich bemerkbare Verzögerung gegenüber dem aufgenommenen Umgebungsschall. Bei einer Ausgabe mittels synthetisierter Sprache erfolgt die Ausgabe vorzugsweise mit einer Verzögerung von maximal 0,2 Sekunden, vorzugsweise maximal 0,1 Sekunden. Bei einer graphisch-schriftlichen Ausgabe der Textdaten auf einem Bildschirm kann die Ausgabe mit größerer Verzögerung gegenüber dem Umgebungsschall erfolgen, ohne dass die Verzögerung von dem Nutzer als störend wahrgenommen wird, da die Textdaten in der graphisch-schriftlichen Ausgabe im Vergleich zu der gesprochenen Sprache schneller erfassbar sind. Die Ausgabe der Textdaten erfolgt in diesem Fall vorzugsweise mit einer Verzögerung von maximal 0,5 Sekunden, insbesondere maximal 0,3 Sekunden auf die Aufnahme des Sprachschalls.

Zwei weitere Varianten des erfindungsgemäßen Verfahrens gleichen der vorstehend beschriebenen ersten bzw. zweiten Variante des erfindungsgemäßen Verfahrens mit dem Unterschied, dass die aus der gesprochenen Sprache abgeleiteten Textdaten hier nicht sofort an den Nutzer ausgegeben werden. Vielmehr werden die Textdaten hier für eine spätere Ausgabe aufgezeichnet (d.h. gespeichert). In einer dritten Variante des erfindungsgemäßen Verfahrens erfolgt diese Aufzeichnung - analog zu der ersten Erfindungsvariante - in graphisch-schriftlicher Form, indem die Textdaten als graphische Darstellung von Text aufgezeichnet werden. In einer vierten Variante des erfindungsgemäßen Verfahrens erfolgt die Aufzeichnung - analog zu der zweiten Erfindungsvariante - in akustischer Form, indem die Textdaten hier als synthetisierte Sprache in einem Audiosignal (also einem eine Schallinformation enthaltendem Datensignal) aufgezeichnet werden.

Auch bei der dritten und vierten Variante des erfindungsgemäßen Verfahrens werden für die in dem Umgebungsschall enthaltene Sprache automatisch und zeitaufgelöst die Herkunftsrichtung und/oder die mindestens eine Sprechereigenschaft bestimmt, wobei wiederum die graphische Darstellung der Textdaten bzw. die synthetisierte Sprache in Abhängigkeit von der ermittelten Herkunftsrichtung und/oder der mindestens einen Sprechereigenschaft zeitaufgelöst variiert werden.

Die vier vorstehend beschriebenen Erfindungsvarianten können im Rahmen der Erfindung einzeln oder in beliebiger Kombination miteinander eingesetzt werden. Beispielsweise können die aus dem Umgebungsschall abgeleiteten Textdaten nur als graphisch-schriftlicher Text, nur als synthetisierte Sprache oder gleichzeitig in beiden Formen ausgegeben werden. Weiterhin können die Textdaten im Rahmen der Erfindung entweder nur unmittelbar an den Nutzer ausgegeben, nur für eine spätere Ausgabe aufgezeichnet oder sowohl sofort ausgegeben als auch aufgezeichnet werden.

Um die graphisch-schriftliche Ausgabe oder Aufzeichnung der Textdaten entsprechend der Herkunftsrichtung des Sprachschalls anzupassen, wird vorzugsweise ein Darstellungsort der Textdaten auf einer Anzeigefläche in Abhängigkeit von der Herkunftsrichtung zeitaufgelöst variiert. Beispielsweise wird der aus dem Umgebungsschall abgeleitete Text immer dann in einem linken Bereich der Anzeigefläche, in der Mitte der Anzeigefläche oder in einem rechten Bereich der Anzeigefläche angezeigt, wenn und solange die ermittelte Herkunftsrichtung ergibt, dass der zugehörige Sprecher - in Blickrichtung des Nutzers gesehen - links von dem Nutzer bzw. dem Nutzer frontal gegenüber bzw. rechts von dem Nutzer angeordnet ist. Der Darstellungsort der Textdaten wird dabei verändert, wenn sich die Herkunftsrichtung des Sprachschalls aufgrund eines Sprecherwechsels, einer Bewegung des Sprechers oder einer Bewegung des Nutzers (insbesondere einer Kopfbewegung) ändert.

Alternativ oder zusätzlich hierzu wird vorzugsweise ein dem Text zugeordnetes richtungsanzeigendes Symbol (z.B. ein Pfeil oder ein Hinweisstrich einer die Textdaten enthaltenden Sprechblase) je nach Herkunftsrichtung des Sprachschalls verändert. Das richtungsanzeigende Symbol zeigt beispielsweise nach links, nach unten (oder oben) oder nach rechts, wenn und solange die ermittelte Herkunftsrichtung ergibt, dass sich der zugehörige Sprecher links von dem Nutzer bzw. dem Nutzer frontal gegenüber bzw. rechts von dem Nutzer befindet.

In einer besonders intuitiven Ausführung der Erfindung erfolgt die graphisch-schriftliche Ausgabe oder Aufzeichnung der Textdaten in Form einer Virtual-Reality-Darstellung (VR-Darstellung), indem die Textdaten in eine während der Aufnahme des Umgebungsschalls aufgenommene Realbildfolge (Video) der Umgebung des Nutzers eingeblendet werden. Die Texteinblendung wird dabei nach Maßgabe der ermittelten Herkunftsrichtung des Sprachschalls einer Abbildung einer zugehörigen Schallquelle in der Realbildfolge örtlich zugeordnet. Mit anderen Worten werden die die Sprache enthaltenden Textdaten jeweils an dem abgebildeten Ort oder nahe an dem abgebildeten Ort in der Realbildfolge eingeblendet, von dem der Sprachschall in der realen Umgebung ausgeht. Sofern der Sprachschall von einer sprechenden Person in der Umgebung des Nutzers erzeugt wird, werden die Textdaten in der Realbildfolge (z.B. in Form einer Sprechblase) in der Nähe der Abbildung dieser Person dargestellt. Wenn der Sprachschall nach Maßgabe der Herkunftsrichtung von einem Tonwiedergabegerät (z.B. einem Radio oder Fernseher) ausgeht, werden die Textdaten entsprechend in der Nähe dieses Geräts dargestellt. Bei einer Änderung der Herkunftsrichtung - z.B. infolge eines Sprecherwechsels, einer Bewegung eines Sprechers oder einer Bewegung des Nutzers (oder eines Bildaufnahmegeräts des Nutzers) - wird auch der Ort der Texteinblendung in der Realbildfolge entsprechend geändert. Die einer Person oder einem Gerät zugeordneten Textdaten werden also in der Realbildfolge stets mit der Abbildung dieser Person bzw. dieses Geräts mitgeführt.

In einer weiteren Ausführung der Erfindung wird Sprache verschiedene Sprecher durch unterschiedliche graphisch-schriftliche Gestaltung der jeweils zugehörigen Textdaten, z.B. durch Wahl der Textfarbe, Textgröße, Schriftart und/oder einer Hintergrundfarbe eines zugeordneten Textfeldes visuell voneinander unterschieden. Diese graphisch-schriftliche Gestaltung wird dabei wiederum für die Ausgabe oder Aufzeichnung der Textdaten zeitaufgelöst variiert. Beispielsweise werden Textdaten, die einem ersten Sprecher zugeordnet werden, stets in einem Textfeld mit rotem Hintergrund dargestellt, während Textdaten, die einem zweiten Sprecher zugeordnet werden, stets in einem Textfeld mit blauem Hintergrund dargestellt werden. Die Unterscheidung verschiedener Sprecher kann dabei im Rahmen der Erfindung anhand der jeweiligen Herkunftsrichtung der in dem Umgebungsschall enthaltenen Sprache erfolgen, wobei beispielsweise eine abrupte Änderung der ermittelten Herkunftsrichtung als Anzeichen für einen Sprecherwechsel erkannt wird. Vorzugsweise erfolgt Unterscheidung verschiedener Sprecher aber - ausschließlich oder zusätzlich zu der Auswertung der Herkunftsrichtung - anhand der mindestens einen erfassten Sprechereigenschaft. Hierbei werden durch Analyse der jeweiligen Stimme, mit der die in dem Umgebungsschall enthaltene Sprache gesprochen wird, z.B. anhand der Stimmfarbe, der tonalen Stimmlage und/oder der Sprechgeschwindigkeit, unterschiedliche Sprecher erkannt und voneinander unterschieden. Die graphisch-schriftliche Gestaltung der Textdaten wird in Anpassung an den jeweils erkannten Sprecher entsprechend variiert.

Um die Ausgabe oder Aufzeichnung der synthetisierten Sprache entsprechend der Herkunftsrichtung des Schallsignals anzupassen, wird das die synthetisierte Sprache enthaltende Schall- bzw. Audiosignal vorzugsweise als Stereosignal mit einer variablen Raumklang-Charakteristik erzeugt, die stets exakt oder näherungsweise der Raumklang-Charakteristik des Sprachschalls entspricht. Das die synthetisierte Sprache enthaltende Schall- bzw. Audiosignal wird also - insbesondere durch gleiche oder unterschiedliche Einstellung der Lautstärke, Zeitverzögerung und/oder Klangfarbe des rechten und linken Stereo-Teilsignals - derart erzeugt, dass die synthetisierte Sprache in der Wahrnehmung des Nutzers aus der für den originären Sprachschall ermittelten Herkunftsrichtung zu kommen scheint. Zur Erzeugung dieser Raumklang-Charakteristik wird insbesondere eine kopfbezogene Übertragungsfunktion (head-related transfer function) auf die synthetisierte Sprache angewendet.

Zusätzlich oder alternativ wird für die Ausgabe oder Aufzeichnung der synthetisierten Sprache das Schall- bzw. Audiosignal bevorzugt hinsichtlich der Stimmfarbe und/oder tonalen Stimmlage in Abhängigkeit von der mindestens einen Sprechereigenschaft zeitaufgelöst variiert. Die synthetisierte Sprache wird dabei insbesondere näherungsweise an die Eigenschaften des originären Sprachschalls angepasst und bei einem Sprecherwechsel entsprechend verändert. Beispielsweise wird die synthetisierte Sprache als weibliche, männliche oder Kinderstimme erzeugt, wenn und solange auch die originäre Sprache in dem Umgebungsschall dem Stimmklang nach von einer Frau bzw. einem Mann bzw. einem Kind gesprochen wird.

Grundsätzlich können im Rahmen der Erfindung die automatische Erfassung der in dem Umgebungsschall enthaltenen Sprache und die graphisch-schriftliche oder akustische Wiedergabe und/oder Aufzeichnung immer dann stattfinden, wenn und solange in dem Umgebungsschall Sprache enthalten ist; somit auch dann, wenn der Nutzer selbst spricht. Vorzugsweise werden diese Verfahrensschritte aber nur auf Sprache angewendet, die nicht von dem Nutzer selbst stammt. Diese Verfahrensschritte werden somit bevorzugt nicht vorgenommen, wenn und solange der Nutzer selbst spricht. Denn für die eigene Sprache des Nutzers würden diese Verfahrensschritte keinen Vorteil bringen, da der Nutzer ja weiß, was er sagt.

Das erfindungsgemäße Hörsystem ist allgemein zur automatischen Durchführung des vorstehend beschriebenen erfindungsgemäßen Verfahrens in einer der beschriebenen Verfahrensvarianten eingerichtet. Die vorstehend beschriebenen Ausführungsformen des erfindungsgemäßen Verfahrens korrespondieren somit mit entsprechenden Ausführungsformen des erfindungsgemäßen Hörsystems. Die vorstehenden Ausführungen zu dem erfindungsgemäßen Verfahren und die damit verbundenen Effekte und Vorteile sind entsprechend auf das erfindungsgemäße Hörsystem übertragbar und umgekehrt.

Das Hörsystem umfasst mindestens ein Hörinstrument, das wiederum mindestens einen Eingangswandler (vorzugsweise mehrere Eingangswandler), einen Signalprozessor und einen Ausgangswandler aufweist. Der oder jeder Eingangswandler dient zur Aufnahme eines Umgebungsschalls aus der Umgebung des Nutzers, d.h. zur Umwandlung des Umgebungsschalls in ein (Eingangs-)Audiosignal, das dem Signalprozessor zugeführt wird. Der Signalprozessor dient zur Modifikation des aufgenommenen Schallsignals. Die Modifikation des aufgenommenen Schallsignals durch den Signalprozessor umfasst vorzugsweise eine frequenzselektive Verstärkung des aufgenommenen Schallsignals (insbesondere zur vollständigen oder teilweisen Kompensation einer Hörschädigung des Nutzers). Ein von dem Signalprozessor ausgegebenes (Ausgangs-)Audiosignal - das eine entsprechend modifizierte Schallinformation enthält - ist dem Ausgangswandler zuführbar, um von diesem an den Nutzer ausgegeben zu werden.

Zur Durchführung des erfindungsgemäßen Verfahrens umfasst das Hörsystem zusätzlich eine Spracherfassungseinheit, eine Analyseeinheit und eine Textaufbereitungseinheit.

Die Spracherfassungseinheit ist dazu eingerichtet, in dem aufgenommenen Umgebungsschall enthaltene Sprache automatisch in Textdaten umzuwandeln. Die Analyseeinheit ist dazu eingerichtet, für die in dem Umgebungsschall enthaltene Sprache automatisch und zeitaufgelöst die Herkunftsrichtung und/oder die mindestens eine Sprechereigenschaft zu bestimmen. Die Textaufbereitungseinheit ist dazu eingerichtet, die Textdaten für die Ausgabe und/oder Aufzeichnung aufzubereiten.

In Varianten des Hörsystems, die der ersten bzw. zweiten Variante des erfindungsgemäßen Verfahrens entsprechen, ist die Textaufbereitungseinheit dazu eingerichtet, die Textdaten als graphische Darstellung von Text auf einem Bildschirm des Hörinstruments oder eines damit datenübertragungstechnisch verbundenen Peripheriegeräts und/oder als synthetisierte Sprache in Form eines Schallsignals an den Nutzer auszugeben, und dabei - wie anhand des erfindungsgemäßen Verfahrens näher beschrieben - die graphische Darstellung bzw. die synthetisierte Sprache in Abhängigkeit von der ermittelten Herkunftsrichtung und/oder der mindestens einen Sprechereigenschaft zeitaufgelöst zu variieren.

In weiteren Varianten des Hörsystems, die der dritten bzw. vierten Variante des erfindungsgemäßen Verfahrens entsprechen, ist die Textaufbereitungseinheit dazu eingerichtet, die Textdaten zur späteren Ausgabe als graphische Darstellung von Text und/oder als synthetisierte Sprache in Form eines Audiosignals aufzuzeichnen, und dabei wiederum die graphische Darstellung der Textdaten bzw. die synthetisierte Sprache in Abhängigkeit von der ermittelten Herkunftsrichtung und/oder der mindestens einen Sprechereigenschaft zeitaufgelöst zu variieren.

Die Einrichtung des Hörsystems zur automatischen Durchführung des erfindungsgemäßen Verfahrens ist programmtechnischer und/oder schaltungstechnischer Natur. Das erfindungsgemäße Hörsystem umfasst also programmtechnische Mittel (Software) und/oder schaltungstechnische Mittel (nicht-programmierbare Hardware, z.B. in Form eines ASIC), die im Betrieb des Hörsystems das erfindungsgemäße Verfahren automatisch durchführen. Die programmtechnischen bzw. schaltungstechnischen Mittel zur Durchführung des Verfahrens können hierbei ausschließlich in dem Hörinstrument (oder den Hörinstrumenten) des Hörsystems, angeordnet sein. Alternativ sind die programmtechnischen bzw. schaltungstechnischen Mittel zur Durchführung des Verfahrens auf das Hörinstrument bzw. die Hörinstrumente sowie mindestens auf ein weiteres Gerät oder eine Softwarekomponente des Hörsystems verteilt. Beispielsweise sind programmtechnische Mittel zur Durchführung des Verfahrens auf das mindestens eine Hörinstrument des Hörsystems sowie auf ein Steuerprogramm des Hörsystems verteilt, wobei letzteres auf einem externen elektronischen Gerät (insbesondere einem Smartphone) installiert ist. Das externe elektronische Gerät ist dabei, wie vorstehend erwähnt, in der Regel selbst kein Teil des Hörsystems.

Das oder jedes Hörinstrument des Hörsystems liegt insbesondere in einer der eingangs beschriebenen Bauformen (BTE-Gerät mit internem oder externem Ausgangswandler, ITE-Gerät, z.B. CIC-Gerät, Hörimplantat, insbesondere Cochlear-Implantat, Hearable, etc.) vor. Im Falle eines binauralen Hörsystems sind vorzugsweise beide Hörinstrumente des Hörsystems baugleich ausgebildet.

Bei dem oder jedem der Eingangswandler handelt es sich insbesondere um einen akusto-elektrischen Wandler (also ein Mikrofon), der einen Luftschall aus der Umgebung in ein elektrisches Eingangs-Audiosignal umwandelt. Der oder jeder Ausgangswandler ist vorzugsweise als elektro-akustischer Wandler (Hörer) ausgebildet, der das von der Signalverarbeitungseinheit modifizierte Audiosignal wiederum in einen Luftschall umwandelt. Alternativ ist der Ausgangswandler zur Abgabe eines Körperschalls oder zur direkten Stimulierung des Hörnervs des Nutzers ausgebildet.

Nachfolgend werden Ausführungsbeispiele der Erfindung anhand einer Zeichnung näher erläutert. Darin zeigen:

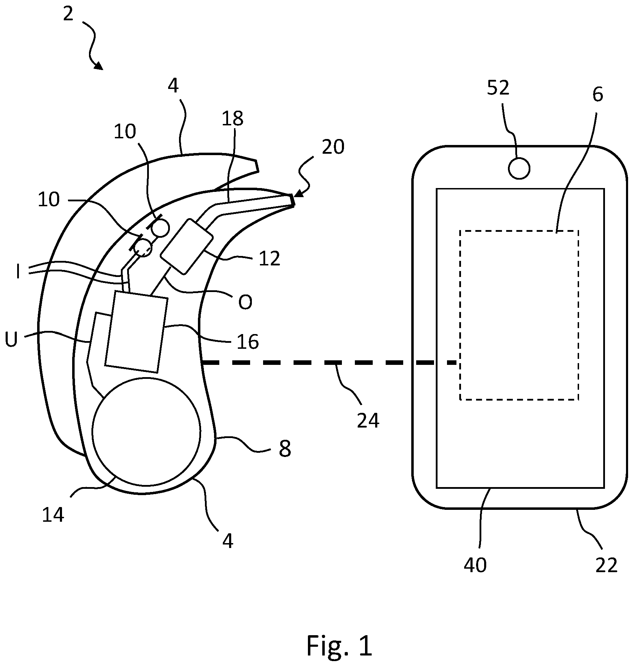

- Fig. 1: in einer schematischen Darstellung ein aus zwei Hörinstrumenten und einem Steuerprogramm (Bedien-App) gebildetes, binaurales Hörsystem, wobei die Hörinstrumente in Form von BTE-Geräten ausgebildet sind, und wobei das Steuerprogramm auf einem (nicht zu dem Hörsystem gehörenden) Smartphone installiert ist,

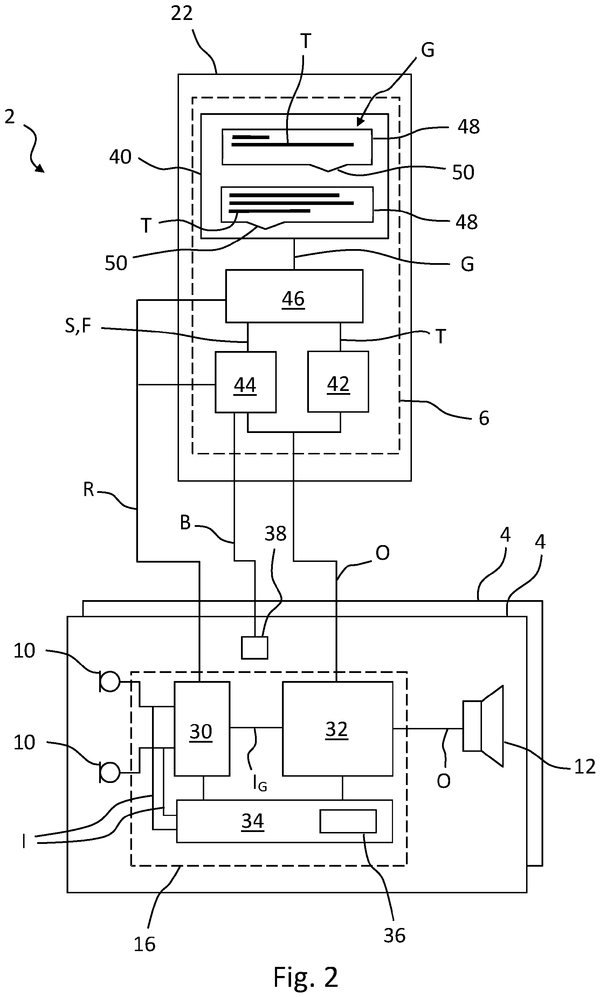

- Fig. 2: in schematischer Darstellung das Hörsystem in einer ersten Ausführungsvariante, in der bei Erkennung von Sprache in dem von den Hörinstrumenten aufgenommenen Umgebungsschall die erkannte Sprache automatisch in Textdaten umgewandelt wird, und in der die Textdaten mittels der Bedien-App als graphische Darstellung von Text auf einem Bildschirm des Smartphones an den Nutzer ausgegeben werden, wobei automatisch und zeitaufgelöst eine Herkunftsrichtung der Sprache bestimmt wird, und wobei die Ausgabe der Textdaten in Abhängigkeit von der ermittelten Herkunftsrichtung variiert wird, indem Textsequenzen mit unterschiedlicher Herkunftsrichtung jeweils in Textfeldern mit einem örtlich in Abhängigkeit von der Herkunftsrichtung variierenden Hinweispfeil dargestellt werden,

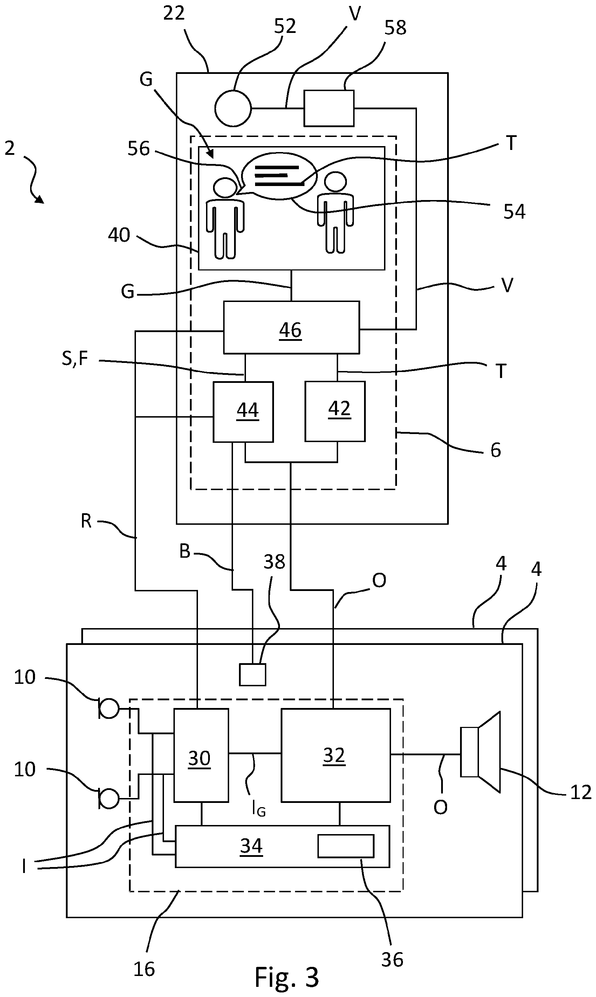

- Fig. 3: in Darstellung gemäß Fig. 2 das Hörsystem in einer zweiten Ausführungsvariante, in der die Ausgabe der Textdaten in Abhängigkeit von der ermittelten Herkunftsrichtung variiert wird, indem Textsequenzen in eine mittels des Smartphones aufgenommene Realbildsequenz der Umgebung des Nutzers, jeweils in räumlicher Zuordnung zu einer zugeordneten Schallquelle, insbesondere einem zugeordneten Sprecher, eingeblendet werden, und

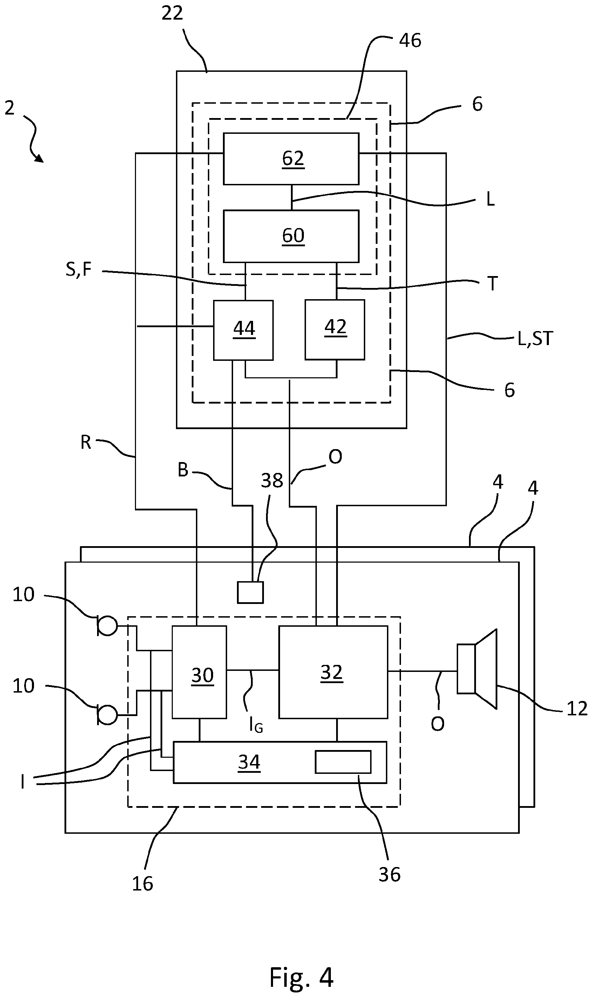

- Fig. 4: in Darstellung gemäß Fig. 2 das Hörsystem in einer dritten Ausführungsvariante, in der die Textdaten in synthetisierte Sprache umgewandelt und über die Hörinstrumente in Form eines Schallsignals an den Nutzer ausgegeben werden, wobei das Schallsignal in Abhängigkeit von der Herkunftsrichtung als Stereosignal mit einer Raumklang-Charakteristik erzeugt wird, die zumindest näherungsweise der Raumklang-Charakteristik des Umgebungsschalls entspricht.

Einander entsprechende Teile und Größen sind in allen Figuren stets mit gleichen Bezugszeichen versehen.

Fig. 1 zeigt ein Hörsystem 2, das (im allgemeinen Fall) mindestens ein Hörinstrument 4, insbesondere ein zur Unterstützung des Hörvermögens eines hörgeschädigten Nutzers eingerichtetes Hörgerät, umfasst. Als optionale Komponente umfasst das in Fig.1 dargestellte Hörsystem 2 weiterhin ein zweites Hörinstrument 4 zur Versorgung des zweiten Ohrs des Nutzers, das hinsichtlich seines inneren Aufbaus insbesondere spiegelbildlich, aber ansonsten baugleich zu dem anderen Hörinstrument 4 ausgebildet ist. Bei den Hörinstrumenten 4 handelt es sich in dem hier dargestellten Beispiel um hinter den Ohren des Nutzers tragbare BTE-Hörinstrumente. Als weitere optionale Komponente umfasst das in Fig.1 dargestellte Hörsystem 2 ein Steuerprogramm, das nachfolgend als "Bedien-App" 6 bezeichnet ist.

Jedes der beiden Hörinstrumente 4 umfasst innerhalb eines Gehäuses 8 zwei Mikrofone 10 als Eingangswandler sowie einen Hörer 12 (Receiver) als Ausgangswandler. Das oder jedes Hörinstrument 4 umfasst weiterhin eine Batterie 14 und eine Signalverarbeitung in Form eines Signalprozessors 16. Vorzugsweise umfasst der Signalprozessor 16 sowohl eine programmierbare Untereinheit (zum Beispiel einen Mikroprozessor) als auch eine nicht-programmierbare Untereinheit (zum Beispiel einen ASIC).

Der Signalprozessor 16 wird aus der Batterie 14 mit einer elektrischen Versorgungsspannung U versorgt.

Im Normalbetrieb des Hörinstruments 4 nehmen die Mikrofone 10 jeweils einen Luftschall aus der Umgebung des jeweiligen Hörinstruments 4 auf. Die Mikrofone 10 wandeln den Schall jeweils in ein (Eingangs-)Audiosignal I um, das Information über den aufgenommenen Schall enthält. Die Eingangs-Audiosignale I werden innerhalb des Hörinstruments 4 dem Signalprozessor 16 zugeführt, der diese Eingangs-Audiosignale I zur Unterstützung des Hörvermögens des Nutzers modifiziert.

Der Signalprozessor 16 gibt ein Ausgangs-Audiosignal O, das Information über den verarbeiteten und somit modifizierten Schall enthält, an den Hörer 12 aus.

Der Hörer 12 wandelt das Ausgangs-Schallsignal O in einen modifizierten Luftschall um. Dieser modifizierte Luftschall wird über einen Schallkanal 18, der den Hörer 12 mit einer Spitze 20 des Gehäuses 8 verbindet, sowie über einen (nicht explizit gezeigten) flexiblen Schallschlauch, der die Spitze 20 mit einem in den Gehörgang des Nutzers eingesetzten Ohrstück verbindet, in den Gehörgang des Nutzers übertragen.

Die Bedien-App 6 ist in dem Beispiel gemäß Fig. 1 in einem Smartphone 22 des Nutzers lauffähig installiert. Das Smartphone 22 ist dabei selbst kein Teil des Hörsystems 2. Die Bedien-App 6 dient unter anderem als Fernsteuerung und Programmiergerät für die Hörinstrumente 4 des Hörsystem 2. Sie ist hierzu im Betrieb des Hörsystems 2 über eine drahtlose Datenübertragungsverbindung 24 mit den Hörinstrumenten 4 zum bilateralen Datenaustausch, insbesondere auf Basis des Bluetooth-Standards, verbunden. Die Bedien-App 6 greift hierzu auf eine nicht explizit dargestellte Sende-Empfangs-Einheit (Transceiver) des Smartphones 22 zu, die mit einer ebenfalls nicht expliziten Sende-Empfangs-Einheit des jeweiligen Hörinstruments 4 die Datenübertragungsverbindung 24 aufbaut.

Fig. 2 zeigt funktionale Komponenten einer ersten Ausführungsvariante des Hörsystems 2 schematisch in größerem Detail. Danach umfasst der Signalprozessor 16 eines jeden Hörinstruments 4 eine direktionale Analyseeinheit (auch als Beamformer-Einheit 30 bezeichnet), die durch adaptives Beamforming oder durch eine Mehrzahl unterschiedlich ausgerichteter Beamformer die Einfallrichtung des jeweils dominanten Schallanteils (und damit die Anordnung der dominanten

Schallquelle relativ zu der Blickrichtung des Nutzers, d.h. der Frontrichtung des Kopfes) bestimmt. Die Beamformer-Einheit 30 kann als elektronischer Hardware-Schaltkreis ausgeführt sein. Vorzugsweise ist die Beamformer-Einheit 30 aber als Software-Komponente in dem Signalprozessor 16 implementiert. Zusätzlich zu den Eingangs-Audiosignalen I der eigenen Mikrofone 10 (also der Mikrofone 10 des Hörinstruments 4, in dem die Beamformer-Einheit 30 implementiert ist) berücksichtigt die Beamformer-Einheit 30 eines jeden Hörinstruments 4 optional (in nicht explizit dargestellter Weise) auch die Eingangs-Audiosignale der Mikrofone 10 des jeweils anderen Hörinstruments 4. Die Eingangs-Audiosignale I werden hierzu gegebenenfalls drahtlos zwischen den Hörinstrumenten 4 ausgetauscht.

Die Beamformer-Einheit 30 eines jeden Hörinstruments 4 gibt einerseits ein gerichtetes Eingangs-Audiosignal I_{G} aus, das einer nachgeschalteten Signalaufbereitungseinheit 32 des Signalprozessors 16 zugeführt wird. Andererseits gibt die Beamformer-Einheit 30 ein Herkunftssignal R aus, das die Herkunft (Einfallsrichtung) des jeweils dominanten Schallanteils, z.B. in Form eines Einfallswinkels relativ zu der Frontrichtung des Kopfes in der Transversalebene des Kopfes, anzeigt. Im Falle einer Sprachaktivität in dem Umgebungsschall ist der dominante Schallanteil typischerweise (jedenfalls überwiegend) durch die in dem Umgebungsschall enthaltene Sprache gebildet.

Die Signalaufbereitungseinheit 32 umfasst mindestens einen Signalverarbeitungsalgorithmus, bevorzugt aber eine Vielzahl von Signalverarbeitungsalgorithmen, mit denen das gerichtete Eingangs-Audiosignal I_{G} zur Unterstützung des Hörvermögens des Nutzers zu dem Ausgangs-Audiosignal O aufbereitet wird. Der Signalverarbeitungsalgorithmus oder die Signalverarbeitungsalgorithmen der Signalaufbereitungseinheit 32 sind dabei zum Beispiel ausgewählt aus Algorithmen für eine frequenzselektive Verstärkung auf Basis eines Audiogramms des Nutzers, eine dynamische Kompression, eine aktive Geräuschunterdrückung, eine Windgeräuschunterdrückung, eine Rückkopplungsunterdrückung, eine automatische Verstärkungskontrolle, etc. Diese Algorithmen sind dabei vorzugsweise als Softwarekomponenten implementiert.

Der Signalprozessor 16 vorzugsweise weiterhin eine Signalanalyseeinheit 34. Diese Signalanalyseeinheit 34 umfasst Algorithmen, die den aufgenommenen Umgebungsschall (also die Eingangs-Audiosignal I) auf vorgegebene Kriterien, z.B. vorgegebene Geräuschklassen, Signal-Rauschverhältnis, etc., hin untersuchen und die Beamformer-Einheit 30 sowie den oder jeden Algorithmus der Signalaufbereitungseinheit 32 in Abhängigkeit von dem Analyseergebnis variabel parametrieren. Die Signalanalyseeinheit 34 umfasst dabei eine Spracherkennungseinheit 36 mit Algorithmen zur Erkennung von Sprachaktivität im Allgemeinen (also dem Vorhandensein von Sprache in dem aufgenommenen Umgebungsschall, unabhängig von dem Sprecher) sowie ggf. der eigenen Sprache des Nutzers im Speziellen.

Optional umfasst mindestens eines der Hörinstrumente 4 ferner einen Beschleunigungssensor 38.

Die Bedien-App 6 ist in dem Ausführungsbeispiel gemäß Fig. 2 dazu ausgebildet, die ggf. in dem aufgenommenen Umgebungsschall (und damit in den Eingangs-Audiosignalen I) enthaltene Sprache fremder (d.h. von dem Nutzer des Hörsystems 2 verschiedener) Sprecher in Text umzuwandeln und diesen Text nach Art von Untertiteln in Echtzeit auf einem Bildschirm 40 des Smartphones 22 anzuzeigen. Die Bedien-App 6 umfasst hierzu - in Form von Software-Komponenten - eine (auch Sprache-zu-Text-Wandler bezeichnete) Spracherfassungseinheit 42, eine Stimmanalyseeinheit 44 und eine Textaufbereitungseinheit 46.

Im Betrieb des Hörsystem 2 werden die Eingangs-Audiosignale I durch die Spracherkennungseinheit 36 fortlaufend daraufhin untersucht, ob der aufgenommene Umgebungsschall Sprachaktivität enthält, die nicht von dem Nutzer selbst stammt; die Spracherkennungseinheit 36 erkennt dies beispielsweise daran, dass ein Sprachaktivitätsdetektor der Spracherkennungseinheit 36 ein positives Prüfungsergebnis liefert, während ein Eigenstimm-Detektor der Spracherkennungseinheit 36 nicht anschlägt. Diese Prüfung wird entweder unabhängig voneinander in beiden Hörinstrumenten 4 durchgeführt oder alternativ nur von der Spracherkennungseinheit 36 eines der beiden Hörinstrumente 4, die in diesem Fall vorzugsweise die Eingangs-Audiosignale I beider Hörinstrumente 4 auswertet.

In dem vorstehend genannten Fall, in dem in dem aufgenommenen Umgebungsschall Sprachaktivität erkannt wird, die nicht von dem Nutzer selbst stammt, veranlasst die Spracherkennungseinheit 36 mindestens eines der Hörinstrumente 4 den Signalprozessor 16 (und hier insbesondere die Signalaufbereitungseinheit 32), das Ausgangs-Audiosignal O drahtlos über die Datenübertragungsverbindung 24 an die Bedien-App 6 zu übermitteln. Weiterhin erhält die Bedien-App 6 von dem mindestens einen Hörinstrument 4 das Herkunftssignal R der Beamformer-Einheit 30 sowie - wenn vorhanden - ein Beschleunigungssignal B des Beschleunigungssensors 38.

Die Spracherfassungseinheit 42 wandelt die in dem Ausgangs-Audiosignal O enthaltene Sprache in Textdaten T um. Die Stimmanalyseeinheit 44 ermittelt anhand spezifischer Eigenschaften des Sprachschalls, insbesondere der Stimmfarbe und/oder der tonalen Stimmlage des Sprachschalls, mindestens eine Sprechereigenschaft S, z.B. das geschätzte Geschlecht und/oder das geschätzte Alter des jeweiligen Sprechers. Anhand der mindestens einen Sprechereigenschaft S unterscheidet die Stimmanalyseeinheit 44 außerdem verschiedene Sprecher voneinander, indem sie deutliche Veränderungen der mindestens einen Sprechereigenschaft S als Anzeichen für einen Sprecherwechsel interpretiert. Zusätzlich zieht die Stimmanalyseeinheit 44 hierzu vorzugsweise das Herkunftssignal R und/oder das Beschleunigungssignal B heran, indem sie aus einer abrupten Änderung des dem Sprachschall zugeordneten Herkunftssignals R und/oder einer Kopfdrehung in Antwort auf eine Richtungsänderung des Sprachschalls auf einen Sprecherwechsel schließt. Die Stimmanalyseeinheit 44 gibt zusammen mit der oder jeder ermittelten Sprechereigenschaft S ein Sprecheridentifikationssignal F an die Textaufbereitungseinheit 46 ab, das den jeweils identifizierten Sprecher kennzeichnet.

In dem Beispiel gemäß Fig. 2 erstellt die Textaufbereitungseinheit 46 aus den Textdaten T eine den Text enthaltende graphische Darstellung G zur Anzeige auf dem Bildschirm 40 des Smartphones 22, die dem Nutzer des Hörsystems 2 hilft, die gehörte Sprache der anderen Sprecher besser zu verstehen. Um den Nutzer hierbei besonders effektiv zu unterstützen, stellt die Textaufbereitungseinheit 46 einzelne Passagen der Textdaten T, die nach Maßgabe des Sprecheridentifikationssignals F verschiedenen Sprechern zuzuordnen sind, in unterschiedlicher (und damit für den Nutzer einfach unterscheidbarer) Form graphisch dar.

Beispielweise stellt die Textaufbereitungseinheit 46 solche, verschiedenen Sprechern zuzuordnende Passagen der Textdaten T in verschiedenen Textfeldern 48 dar. Optional werden die Textfelder 48 dabei in verschiedenen, für den jeweiligen Sprecher charakteristischen Farben dargestellt. Weiter optional wählt die Textaufbereitungseinheit 46 die jeweilige Farbe der Textfelder T nach Maßgabe der mindestens einen Sprechereigenschaft S aus. So ordnet die Textaufbereitungseinheit 46 beispielsweise einer aufgrund der Stimmanalyse als weiblich erkannten Sprecherin einen Rotton zu, während sie einem aufgrund der Stimmanalyse als männlich erkannten Sprecher einen Blauton zuordnet.

Als weitere Maßnahme zur einfachen Zuordnung der einzelnen Textfelder 48 zu gegebenenfalls mehreren Sprechern ordnet die Textaufbereitungseinheit 46 anhand des Herkunftssignals R ein richtungsanzeigendes Symbol eines jeden Textfeldes 48 (hier in Form eines Pfeils 50) derart an, dass die Position dieses Symbols auf dem Bildschirm 40 die Anordnung des dem Textfeld 48 zugeordneten Sprechers zu dem Nutzer anzeigt. Bei Textfeldern 48, die einem links von dem Nutzer stehenden Sprecher zugeordnet werden, wird der Pfeil 50 in dem linken Bereich des Textfeldes 48 dargestellt. Bei Textfeldern 48, die einem rechts von dem Nutzer stehenden Sprecher zugeordnet werden, wird der Pfeil 50 in dem rechten Bereich des Textfeldes 48 dargestellt. Und bei Textfeldern 48, die einem dem Nutzer frontal gegenüberstehenden Sprecher zugeordnet werden, wird der Pfeil 50 mittig bezüglich des Textfeldes 48 dargestellt.

Zusätzlich oder alternativ zu der sofortigen Anzeige der Textfelder 48 auf dem Bildschirm 40 zeichnet die Bedien-App 6 die graphische Darstellung G in einem Speicher des Smartphones 22 für eine spätere Ausgabe auf dem Smartphone 22 oder einem anderen Gerät auf.

In Zeitintervallen, in denen der Nutzer selbst spricht (und in denen daher die Spracherkennungseinheit 36 die eigene Stimme des Nutzers in dem aufgenommenen Umgebungsschall erkennt), wird das Ausgangs-Audiosignal O bevorzugt nicht an die Bedien-App 6 weitergeleitet. In diesem Fall unterbleibt entsprechend auch die Umwandlung des Sprachschalls in Textdaten T und deren graphische Anzeige auf dem Bildschirm 40.

Fig. 3 zeigt schematisch eine alternative Ausgestaltung des Hörsystems 2, bei der die graphische Darstellung G der aus dem Sprachschall erfassten Textdaten T als Virtual-Reality-Anwendung ausgestaltet wird. Die Ausführungsvariante gemäß Fig. 3 entspricht bis auf die nachfolgend näher erläuterten Unterschiede der Ausführung aus Fig. 2. Abweichend von der letzteren wird gemäß Fig. 3 aber mittels einer Kamera 52 des Smartphones 22 eine Realbildfolge V (also ein Video der echten Umgebung des Nutzers) aufgenommen und in Echtzeit (vorzugsweise mit einer Verzögerung von maximal 0,5 Sekunden) auf dem Bildschirm 40 des Smartphones 22 dargestellt.

Zur graphischen Darstellung der aus dem Sprachschall erfassten Textdaten T fügt die Textaufbereitungseinheit 46 in dem Beispiel gemäß Fig. 3 die einem jeden (von dem Nutzer verschiedenen) Sprecher zugeordneten Textpassagen in Sprechblasen 54 ein, die die Textaufbereitungseinheit 46 hier nach Maßgabe des Herkunftssignals R nahe bei dem Abbild des zugeordneten Sprechers oder tonerzeugenden Gegenstands (Radio, Fernseher, etc.) in die Realbildfolge V einblendet. Dabei ordnet die Textaufbereitungseinheit 46 einen Hinweisstrich 56 der Sprechblase 54 derart an, dass der Hinweisstrich 56 auf die sprechende Person oder den schallerzeugenden Gegenstand zeigt. Um eine bessere Zuordnung der Sprechblasen 54 zu der jeweils zugeordneten Schallquelle zu ermöglichen, nutzt die Bedien-App 6 vorzugsweise eine der Kamera 52 nachgeschaltete Bilderkennungseinheit 58, die beispielsweise Köpfe von abgebildeten Personen oder andere Schallquellen in der Realbildfolge automatisch erkennt. Als Bilderkennungseinheit 58 nutzt die Bedien-App 6 hierbei vorzugsweise eine Standard-Funktion der Kamera-App des Smartphones 22.

Auch bei der Ausführungsvariante des Hörsystems 2 gemäß Fig. 3 kann die graphische Darstellung G der Textdaten T, hier also die Realbildfolge V mit den eingeblendeten Sprechblasen 54, zusätzlich oder alternativ zu der sofortigen Anzeige auf dem Bildschirm 40 durch die Bedien-App 6 in einem Speicher des Smartphones 22 für eine spätere Ausgabe auf dem Smartphone 22 oder einem anderen Gerät aufgezeichnet werden.

**In** Fig. 4 ist eine weitere Ausführungsvariante des Hörsystem 2 dargestellt, die wiederum mit Ausnahme der nachfolgend beschriebenen Unterschiede den Ausführungsvarianten gemäß Fig. 2 und 3 entspricht. Abweichend von den letzteren ist bei der Ausführungsvariante gemäß Fig. 4 anstelle einer graphisch-schriftlichen Aufbereitung der Textdaten T eine akustische Aufbereitung der Textdaten T in Form von synthetisierter Sprache L vorgesehen.

Die Textaufbereitungseinheit 46 umfasst hierzu in der Ausführungsvariante gemäß Fig. 4 eine Sprachsyntheseeinheit 60 und eine Raumklagerzeugungseinheit 62. Die Sprachsyntheseeinheit 60 wandelt die Textdaten T in die synthetisierte Sprache L um. **In** Abhängigkeit von der mindestens einen ermittelten Sprechereigenschaft S und dem Sprecheridentifikationssignal F erzeugt die Sprachsyntheseeinheit 60 die synthetisierte Sprache L dabei für unterschiedliche identifizierte Sprecher mit jeweils anderen zugeordneten künstlichen Stimmen. Insbesondere erzeugt die Sprachsyntheseeinheit 60 die synthetisierte Sprache L für jeden der unterschiedlichen identifizierten Sprecher mit einer Stimme, die nach Maßgabe der mindestens einen Sprechereigenschaft F der echten Stimme dieses Sprechers ähnelt. So werden beispielsweise Textpassagen, die einer (weiblichen) Sprecherin zugeordnet werden, mit einer weiblich klingenden Stimme synthetisiert, während Textpassagen, die einem (männlichen) Sprecher zugeordnet werden, mit einer männlich klingenden Stimme synthetisiert werden.

Optional werden weiterhin die einzelnen Textpassagen jeweils mit einer Stimme synthetisiert, die zu dem geschätzten Alter des jeweiligen Sprechers passt. So werden beispielsweise Textpassagen, die einem jungen Sprecher zugeordnet werden, mit einer jung klingenden Stimme synthetisiert, während Textpassagen, die einem älteren Sprecher zugeordnet werden, mit einer älter klingenden Stimme synthetisiert werden.

In allen Fällen wird die synthetisierte Sprache L vorzugsweise als Hochsprache mit klarer Artikulation erzeugt. Die Verwendung von Akzenten, Dialekten und/oder undeutlicher Aussprache wird somit bei der Erzeugung der synthetisierten Sprache L vorzugsweise vermieden.

Die Sprachsyntheseeinheit 60 gibt die solchermaßen erzeugte synthetisierte Sprache L in Form eines Audio-Signals an die nachgeschaltete Raumklangerzeugungseinheit 62 aus. Die Raumklangerzeugungseinheit 62 wandelt die synthetisierte Sprache L in Abhängigkeit von dem Herkunftssignal R in ein Stereosignal ST mit einer Raumklang-Charakteristik um, die exakt oder näherungsweise der Raumklang-Charakteristik des Umgebungsschalls entspricht. Die Bedien-App 6 führt dieses Stereosignal ST wieder den Hörinstrumenten 4 (und hier insbesondere den Signalaufbereitungseinheiten 32) zu, die das Stereosignal ST (vorzugsweise in Echtzeit, nämlich mit einer Verzögerung von maximal 0,2 Sekunden) über die Hörer 12 der Hörinstrumente 4 in Form von Luftschall in die beiden Ohren des Nutzers abgeben.

Infolge der durch die Raumklangerzeugungseinheit 62 erzeugten Raumklangcharakteristik des Stereosignals ST klingen Textpassagen eines links von, rechts von oder frontseitig zu dem Nutzer positionierten Sprechers derart, als würde auch die synthetisierte Sprache L aus Sicht des Nutzers von links bzw. von rechts bzw. von vorne kommen. Für diese Umwandlung wendet die Raumklangerzeugungseinheit 62 insbesondere eine hinterlegte kopfbezogene Übertragungsfunktion (head-related transfer function) auf die synthetisierte Sprache L an.

Während der Ausgabe der synthetisierten Sprache L an den Nutzer blenden die Signalaufbereitungseinheiten 32 der Hörinstrumente 4 vorzugsweise den echten aufgenommenen Umgebungsschall, insbesondere (und vorzugsweise selektiv nur oder in höherem Maße) in dem für die aufgenommene Sprache relevanten Frequenzbereich aus, um zu verhindern, dass sich die synthetisierte Sprache L in dem Ausgangs-Audiosignal O störend mit der echten aufgenommenen Sprache überlagert. Optional werden künstlich erzeugte Umgebungsgeräusche (Rauschen, Vogelgezwitscher, Musik) der synthetisierten Sprache L zugemischt, um eine unnatürlich anmutende Geräuschsituation zu vermeiden. Es wird somit bevorzugt insbesondere eine vollständige, natürlich anmutende Geräuschkulisse synthetisiert.

Auch bei dieser Ausführungsvariante des Hörsystems 2 kann zusätzlich zu oder anstelle der sofortigen Ausgabe der aufbereiteten Textdaten T, hier also der synthetisierten Sprache L, durch die Bedien-App 6 eine Aufzeichnung der synthetisierten Sprache L für eine spätere Ausgabe auf dem Smartphone 22 oder einem anderen Gerät erfolgen. Zudem kann die Ausführungsvariante gemäß Fig. 4 mit den Ausführungsvarianten gemäß Fig. 2 und 3 kombiniert werden, indem die Bedien-App 6 optional eine gleichzeitige Ausgabe und/oder Aufzeichnung sowohl der graphisch Darstellung G der Textdaten T als auch der synthetisierten Sprache L veranlasst.

Die Erfindung wird an den vorstehend beschriebenen Ausführungsbeispielen besonders deutlich, ist auf diese Ausführungsbeispiele aber keineswegs beschränkt. Vielmehr können weitere Ausführungsformen der Erfindung aus den Ansprüchen und der vorstehenden Beschreibung abgeleitet werden.

### Bezugszeichenliste

- 2: Hörsystem
- 4: Hörinstrument
- 6: Bedien-App
- 8: Gehäuse
- 10: Mikrofon
- 12: Hörer
- 14: Batterie
- 16: Signalprozessor
- 18: Schallkanal
- 20: Spitze
- 22: Smartphone
- 24: Datenübertragungsverbindung
- 30: Beamformer-Einheit
- 32: Signalaufbereitungseinheit
- 34: Signalanalyseeinheit
- 36: Spracherkennungseinheit
- 38: Beschleunigungssensor
- 40: Bildschirm
- 42: Spracherfassungseinheit
- 44: Stimmanalyseeinheit
- 46: Textaufbereitungseinheit
- 48: Textfeld
- 50: Pfeil
- 52: Kamera
- 54: Sprechblase
- 56: Hinweisstrich
- 58: Bilderkennungseinheit
- 60: Sprachsyntheseeinheit
- 62: Raumklangerzeugungseinheit
- B: Beschleunigungssignal
- F: Sprecheridentifikationssignal
- G: (graphische) Darstellung
- I: (Eingangs-)Audiosignal
- I_{G}: (gerichtetes Eingangs-)Audiosignal
- L: (synthetisierte) Sprache
- O: (Ausgangs-)Audiosignal
- R: Herkunftssignal
- S: Sprechereigenschaft
- ST: Stereosignal
- T: Textdaten
- U: Versorgungsspannung
- V: Realbildfolge

## Patentansprüche

1. Verfahren zur Unterstützung des Hörverständnisses eines Nutzers eines Hörinstruments (4),
- bei dem mittels des Hörinstruments (4) ein Sprache enthaltender Umgebungsschall aus der Umgebung des Nutzers aufgenommen wird,
- bei dem die in dem aufgenommenen Umgebungsschall enthaltene Sprache automatisch in Textdaten (T) umgewandelt wird, und
- bei dem die Textdaten (T)
-- als graphische Darstellung (G) von Text auf einem Bildschirm (40) des Hörinstruments (4) oder eines damit datenübertragungstechnisch verbundenen Peripheriegeräts (22) und/oder
-- als synthetisierte Sprache (L) in Form eines Schallsignals an den Nutzer ausgegeben werden,
wobei für die in dem Umgebungsschall enthaltene Sprache automatisch und zeitaufgelöst eine Herkunftsrichtung (R) und/oder mindestens eine Sprechereigenschaft (S) bestimmt werden, und wobei die graphische Darstellung (G) der Textdaten (T) bzw. die synthetisierte Sprache (L) in Abhängigkeit von der ermittelten Herkunftsrichtung (R) und/oder der mindestens einen Sprechereigenschaft (S) zeitaufgelöst variiert werden.

2. Verfahren nach Anspruch 1,
wobei die Textdaten (T) bzw. die synthetisierte Sprache (L) in Echtzeit an den Nutzer ausgegeben werden.

3. Verfahren zur Unterstützung des Hörverständnisses eines Nutzers eines Hörinstruments (4),
- bei dem mittels des Hörinstruments (4) ein Sprache enthaltender Umgebungsschall aus der Umgebung des Nutzers aufgenommen wird,
- bei dem die in dem aufgenommenen Umgebungsschall enthaltene Sprache automatisch in Textdaten (T) umgewandelt wird, und
- bei dem die Textdaten (T)
-- als graphische Darstellung (G) von Text und/oder
-- als synthetisierte Sprache (L) in einem Audiosignal,
zur späteren Ausgabe aufgezeichnet werden, wobei für die in dem Umgebungsschall enthaltene Sprache automatisch und zeitaufgelöst eine Herkunftsrichtung (R) und/oder mindestens eine Sprechereigenschaft (S) bestimmt werden, und wobei die graphische Darstellung (G) der Textdaten (T) bzw. die synthetisierte Sprache (L) in Abhängigkeit von der ermittelten Herkunftsrichtung (R) und/oder der mindestens einen Sprechereigenschaft (S) zeitaufgelöst variiert werden.

4. Verfahren nach einem der Ansprüche 1 bis 3,
wobei für die graphische Darstellung (G) der Textdaten (T) ein Darstellungsort oder/oder ein dem Text zugeordnetes richtungsanzeigendes Symbol (50, 56) in Abhängigkeit in Abhängigkeit von der ermittelten Herkunftsrichtung (R) zeitaufgelöst variiert werden.

5. Verfahren nach einem der Ansprüche 1 bis 4,
wobei die graphische Darstellung (G) der Textdaten (T) in Form einer Texteinblendung in eine während der Aufnahme des Umgebungsschalls aufgenommene Realbildfolge (V) der Umgebung des Nutzers erfolgt, und wobei die Texteinblendung einer Abbildung einer zugehörigen Schallquelle in der Realbildfolge (V) örtlich zugeordnet wird.

6. Verfahren nach einem der Ansprüche 1 bis 4,
wobei für die graphische Darstellung (G) der Textdaten (T) eine Textfarbe, eine Textgröße, eine Schriftart und/oder eine Hintergrundfarbe eines zugeordneten Textfeldes (48) zeitaufgelöst variiert werden.

7. Verfahren nach einem der Ansprüche 1 bis 6,
wobei die synthetisierte Sprache (L) in Abhängigkeit von der Herkunftsrichtung (R) als Stereosignal (ST) mit einer Raumklang-Charakteristik erzeugt wird, die exakt oder näherungsweise einer Raumklang-Charakteristik des Umgebungsschalls entspricht.

8. Verfahren nach einem der Ansprüche 1 bis 7,
wobei die synthetisierte Sprache (L) hinsichtlich einer Stimmfarbe und/oder einer tonalen Stimmlage in Abhängigkeit von der mindestens einen Sprechereigenschaft (S) zeitaufgelöst variiert wird.

9. Hörsystem (2) mit mindestens einem Hörinstrument (4), das mindestens einen Eingangswandler (10) zur Aufnahme eines Umgebungsschalls aus der Umgebung des Nutzers, einen Signalprozessor (16) zur Modifikation des aufgenommenen Schallsignals und einen Ausgangswandler (12) zur Ausgabe des modifizierten Schallsignals an den Nutzer aufweist,
- wobei das Hörsystem (2) zusätzlich eine Spracherfassungseinheit (42), eine Analyseeinheit (30, 44) und eine Textaufbereitungseinheit (46) aufweist,
- wobei die Spracherfassungseinheit (42) dazu eingerichtet ist, in dem aufgenommenen Umgebungsschall enthaltene Sprache automatisch in Textdaten (T) umzuwandeln,
- wobei die Analyseeinheit (30,44) dazu eingerichtet ist, für die in dem Umgebungsschall enthaltene Sprache automatisch und zeitaufgelöst eine Herkunftsrichtung (R) und/oder mindestens eine Sprechereigenschaft (S) zu bestimmen, und
- wobei die Textaufbereitungseinheit (46) dazu eingerichtet ist, die Textdaten (T)
-- als graphische Darstellung (G) von Text auf einem Bildschirm (40) des Hörinstruments (4) oder eines damit datenübertragungstechnisch verbundenen Peripheriegeräts (22) und/oder
-- als synthetisierte Sprache (L) in Form eines Schallsignals an den Nutzer auszugeben, und die graphische Darstellung (G) bzw. die synthetisierte Sprache (L) in Abhängigkeit von der ermittelten Herkunftsrichtung (R) und/oder der mindestens einen Sprechereigenschaft (S) zeitaufgelöst zu variieren.

10. Hörsystem (2) mit mindestens einem Hörinstrument (4), das mindestens einen Eingangswandler (10) zur Aufnahme eines Umgebungsschalls aus der Umgebung des Nutzers, einen Signalprozessor (16) zur Modifikation des aufgenommenen Schallsignals und einen Ausgangswandler (12) zur Ausgabe des modifizierten Schallsignals an den Nutzer aufweist,
- wobei das Hörsystem (2) zusätzlich eine Spracherfassungseinheit (42), eine Analyseeinheit (30,44) und eine Textaufbereitungseinheit (46) aufweist,
- wobei die Spracherfassungseinheit (42) dazu eingerichtet ist, in dem aufgenommenen Umgebungsschall enthaltene Sprache automatisch in Textdaten (T) umzuwandeln,
- wobei die Analyseeinheit (30,44) dazu eingerichtet ist, für die in dem Umgebungsschall enthaltene Sprache automatisch und zeitaufgelöst eine Herkunftsrichtung (R) und/oder mindestens eine Sprechereigenschaft (S) zu bestimmen, und
- wobei die Textaufbereitungseinheit (46) dazu eingerichtet ist, die Textdaten (T)
-- als graphische Darstellung (G) von Text und/oder
-- als synthetisierte Sprache (L) in Form eines Audiosignals zur späteren Ausgabe aufzuzeichnen, und die graphische Darstellung (G) bzw. die synthetisierte Sprache (L) in Abhängigkeit von der ermittelten Herkunftsrichtung (R) und/oder der mindestens einen Sprechereigenschaft (S) zeitaufgelöst zu variieren.
